# FASCICULE DE BREVET EUROPEEN

(11) **EP 3 894 246 B1**
(45) Date de publication et mention de la délivrance du brevet: **28.12.2022**
(21) Numéro de dépôt: 19870039.5
(22) Date de dépôt: 29.11.2019
(51) Int. Cl.: B60H 1/24, B60J 5/04, B60R 13/02

(54) **PROCÉDÉ D'ASSEMBLAGE D'UN PANNEAU À AÉRATEUR À ACCOSTAGES MULTIPLE, À UNE PORTE DE VÉHICULE**
VERFAHREN ZUR MONTAGE EINER PLATTE MIT EINEM LUFTAUSLASS MIT MEHREREN STOSSVERBINDUNGEN AN EINER FAHRZEUGTÜR
METHOD FOR MOUNTING A PANEL HAVING AN AIR VENT WITH MULTIPLE BUTTED JOINTS ON A VEHICLE DOOR

(30) Priorité: 10.12.2018 FR 1872610
(43) Date de publication de la demande: 20.10.2021
(73) Titulaire: PSA Automobiles SA, 78300 Poissy (FR)
(72) Inventeur: BREFORT, Laurent, 78280 GUYANCOURT (FR)
(86) Numéro de dépôt international: PCT/FR2019/052863
(87) Numéro de publication internationale: WO 2020/120864

(56) Documents cités:
- EP-A1- 0 579 535

## Description

### Domaine technique de l'invention

L'invention concerne les portes de véhicule, et plus précisément l'assemblage d'un panneau interne à de telles portes.

### Etat de la technique

La plupart des portes de véhicule, permettant l'accès à un habitacle, comprennent une structure (généralement métallique) ayant une face interne à laquelle est solidarisé un panneau (dit panneau de porte). Parfois, ce dernier comprend une partie supérieure, située au voisinage de la vitre, et munie d'une ouverture au niveau de laquelle est solidarisé un aérateur de l'installation de chauffage et/ou climatisation.

L'assemblage d'un tel aérateur à la partie supérieure du panneau de porte ne pose pas de réel problème lorsqu'il se fait au niveau d'une ouverture qui est intégralement définie dans une sous-partie « monobloc » de cette partie supérieure. Mais, comme le sait l'homme de l'art, un tel assemblage pose des problèmes d'accostage qui nuisent à l'impression visuelle et/ou sonore de qualité du véhicule lorsque l'ouverture est délimitée par au moins deux sous-parties de la partie supérieure du panneau de porte, couplées entre elles. Cela résulte du fait que l'on se retrouve en présence d'accostages multiple selon des directions différentes entre l'enjoliveur et les sous-parties de la partie supérieure du panneau de porte.

Le document EP-A1-0579535 divulgue un exemple d'un panneau de porte d'un véhicule, qui comporte une partie supérieure qui est munie d'un aérateur qui comporte un boîtier ayant une face avant devant laquelle est placé un enjoliveur et une face interne qui est destinée à être reliée à une canalisation d'un circuit d'air qui est positionnée dans la porte.

L'invention a donc notamment pour but d'améliorer la situation.

### Présentation de l'invention

Elle propose notamment à cet effet un procédé, destiné à permettre l'assemblage d'un panneau à une porte d'un véhicule, et comprenant une première étape dans laquelle on constitue une partie supérieure du panneau munie d'un aérateur comportant un boîtier ayant une face avant devant laquelle est placé un enjoliveur, et une seconde étape dans laquelle on solidarise le panneau à une face interne d'une structure de la porte.

Ce procédé d'assemblage se caractérise par le fait que :
- dans sa première étape on couple entre elles des première, deuxième et troisième sous-parties de la partie supérieure afin qu'elles délimitent une ouverture, puis on solidarise le boîtier à une face arrière de la partie supérieure, au niveau de l'ouverture, puis on couple par clippage l'enjoliveur au moins à la troisième sous-partie, devant la face avant du boîtier, tout en faisant passer au moins une bouterolle de l'enjoliveur au travers d'un premier trou correspondant et défini dans la deuxième sous-partie, et
- dans sa seconde étape on fait traverser chaque bouterolle au travers d'un deuxième trou correspondant et défini dans la structure, puis on solidarise une extrémité libre de chaque bouterolle à la structure.

Ce clippage de l'enjoliveur sur la partie supérieure combiné à la solidarisation de chaque bouterolle de l'enjoliveur sur la structure permettent d'éviter les problèmes d'accostage entre l'enjoliveur et les première, deuxième et troisième sous-parties de la partie supérieure et les vibrations locales de l'enjoliveur par rapport à la partie supérieure ou de cette dernière par rapport à la structure.

Le procédé d'assemblage selon l'invention peut comporter d'autres caractéristiques qui peuvent être prises séparément ou en combinaison, et notamment :
- dans sa seconde étape on peut solidariser l'extrémité libre de chaque bouterolle à la structure par une fonte par ultrasons alors que l'enjoliveur est plaqué étroitement contre la partie supérieure du panneau de porte ;
- dans sa première étape on peut faire passer au moins un pion d'indexage de l'enjoliveur au travers d'un troisième trou correspondant défini dans la troisième sous-partie afin de positionner l'enjoliveur par rapport à cette dernière avant de réaliser le clippage ;
   > dans sa première étape on peut faire passer au travers de deux troisièmes trous deux pions d'indexage définis sur un premier côté de l'enjoliveur comportant aussi au moins un clip et situé à l'opposé d'un deuxième côté comportant chaque bouterolle ;
- dans sa première étape on peut clipper l'enjoliveur sur la troisième sous-partie au moyen d'au moins deux clips définis sur au moins des premier et troisième côtés voisins de l'enjoliveur ;
   ➢ dans sa première étape on peut clipper l'enjoliveur sur la troisième sous-partie au moyen de deux clips définis sur le premier côté de l'enjoliveur et de deux clips définis sur le troisième côté de l'enjoliveur.

L'invention propose également une porte destinée à équiper un véhicule, et réalisée par la mise en oeuvre d'un procédé d'assemblage du type de celui présenté ci-avant.

Par exemple, cette porte peut être destinée à délimiter partiellement une partie avant d'un habitacle de véhicule.

L'invention propose également un véhicule, éventuellement de type automobile, et comprenant au moins une porte du type de celle présentée ci-avant.

### Brève description des figures

D'autres caractéristiques et avantages de l'invention apparaîtront à l'examen de la description détaillée ci-après, et des dessins annexés, sur lesquels :
[Fig. 1] illustre schématiquement, dans une vue en perspective, un exemple de réalisation d'une porte assemblée par la mise en oeuvre d'un procédé d'assemblage selon l'invention,
[Fig. 2] illustre schématiquement, dans une vue en perspective, une partie d'un exemple de réalisation d'une troisième sous-partie d'une partie supérieure d'un panneau de porte, à l'arrière de laquelle est solidarisé un boîtier d'aérateur,
[Fig. 3] illustre schématiquement, dans une vue en perspective, un exemple de réalisation d'un enjoliveur d'aérateur avant son couplage par clippage à une troisième sous-partie d'une partie supérieure d'un panneau de porte,
[Fig. 4] illustre schématiquement, dans une vue en perspective, l'enjoliveur de la figure 3 après son couplage par clippage à une troisième sous-partie d'une partie supérieure d'un panneau de porte, et après la traversée de la deuxième sous-partie de cette partie supérieure par ses bouterolles,
[Fig. 5] illustre schématiquement, dans une vue en perspective, une partie de la partie supérieure d'un panneau de porte avant la solidarisation de ce dernier à la structure d'une porte, et
[Fig. 6] illustre schématiquement un exemple d'algorithme mettant en oeuvre un procédé d'assemblage selon l'invention.

### Description détaillée de l'invention

L'invention a notamment pour but de proposer un procédé d'assemblage destiné à permettre l'assemblage d'un panneau 1, muni d'un aérateur 2, à une porte 3 d'un véhicule.

Dans ce qui suit, on considère, à titre d'exemple non limitatif, que le véhicule est de type automobile. Il s'agit par exemple d'une voiture. Mais l'invention n'est pas limitée à ce type de véhicule. Elle concerne en effet tout type de véhicule comportant au moins une porte donnant accès à un habitacle. Par conséquent, l'invention concerne au moins les véhicules terrestres (et notamment les véhicules automobiles, les véhicules utilitaires, les engins de voirie, les camions, les cars (ou bus), et les engins de chantier), et certains aéronefs.

Par ailleurs, on considère dans ce qui suit, à titre d'exemple non limitatif, que la porte 3 est une porte avant destinée à délimiter partiellement une partie avant d'un habitacle de véhicule. Mais l'invention n'est pas limitée à cette implantation. En effet, la porte pourrait être destinée à délimiter partiellement une partie intermédiaire ou arrière d'un habitacle de véhicule.

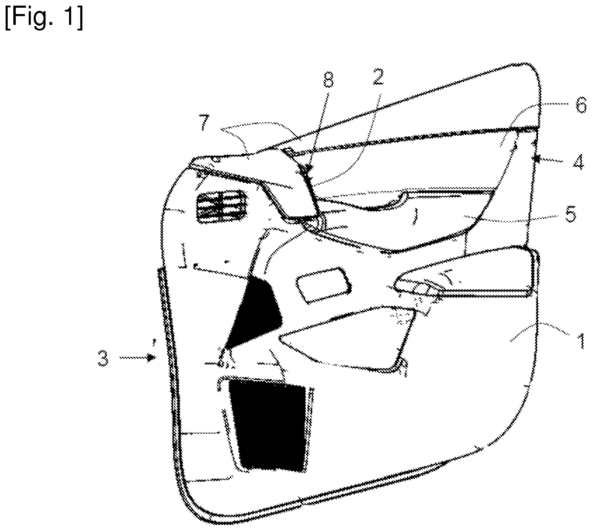

On a schématiquement représenté sur la figure 1, une porte avant 3 de véhicule comprenant une structure 15 à laquelle est solidarisé fixement un panneau de porte 1 comportant une partie supérieure 4 constituée par couplage de première 5, deuxième 6 et troisième 7 sous-parties et munie d'un aérateur 2.

La première sous-partie 5, la plus basse, est parfois appelée « médaillon inférieur ». La deuxième sous-partie 6, placée au-dessus de la première sous-partie 5, est parfois appelée « médaillon supérieur ». La troisième sous-partie 7, placée au moins devant les première 5 et deuxième 6 sous-parties, est parfois appelée « bandeau supérieur ». On notera que dans l'exemple illustré non limitativement sur la figure 1 la troisième sous-partie 7 comprend aussi une extension vers l'arrière placée au-dessus de la deuxième sous-partie 6.

Ces première 5, deuxième 6 et troisième 7 sous-parties comprennent chacune au moins un élément principal réalisé, par exemple, par moulage (ou injection) d'une matière plastique. On notera que l'élément principal de l'une au moins des première 5, deuxième 6 et troisième 7 sous-parties peut éventuellement comporter une face interne (destinée à être orientée vers l'habitacle) à laquelle est solidarisé un garnissage masqué par un revêtement ou bien seulement un revêtement.

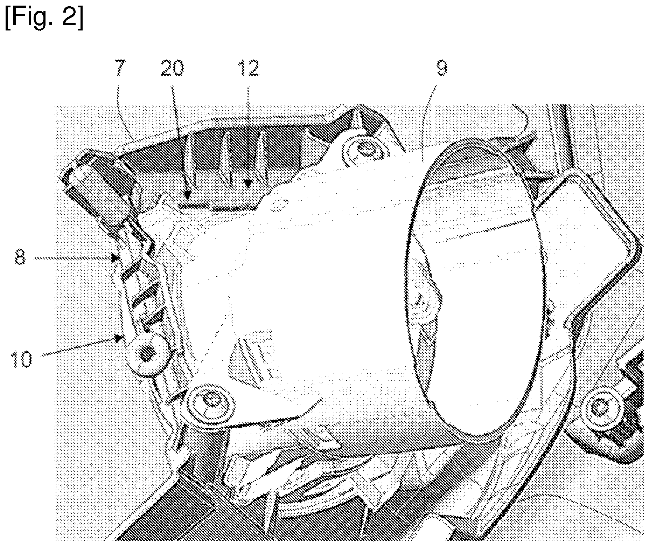

Par ailleurs, les première 5, deuxième 6 et troisième 7 sous-parties délimitent une ouverture 8 au niveau de laquelle est installé l'aérateur 2. Comme illustré non limitativement sur la figure 2, l'aérateur 2 comprend un boîtier 9 ayant une face avant 10 devant laquelle doit être placé un enjoliveur 11.

Comme évoqué précédemment, l'invention propose notamment un procédé d'assemblage destiné à permettre l'assemblage du panneau de porte 1 à une porte 3 d'un véhicule. Ce procédé d'assemblage comprend des première 100-120 et seconde 130-140 étapes.

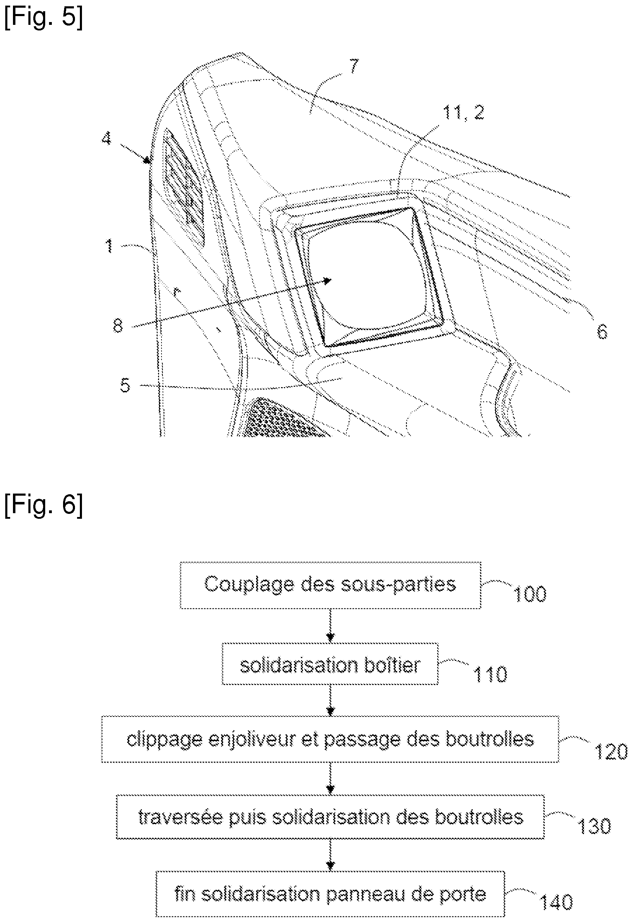

Dans la première étape 100-120, du procédé d'assemblage, on constitue la partie supérieure 4 du panneau 1 munie de l'aérateur 2. Pour ce faire, on commence par coupler entre elles les première 5, deuxième 6 et troisième 7 sous-parties de la partie supérieure 4 afin qu'elles délimitent l'ouverture 8. Ce couplage peut, par exemple, se faire par clippage et/ou vissage. Le résultat de ce couplage est illustré sur la figure 5.

Puis, comme illustré non limitativement sur la figure 2, on solidarise le boîtier 9 de l'aérateur 2 à une face arrière 12 de la partie supérieure 4 (destinée à être orientée vers la structure 15 de la porte 3), au niveau de l'ouverture 8. Cette solidarisation après une introduction par l'arrière (du côté de la face arrière 12) peut, par exemple, se faire par clippage et/ou vissage, comme illustré non limitativement sur la figure 2. On notera que dans l'exemple illustré sur la figure 2, le boîtier 9 est solidarisé à la troisième sous-partie 7.

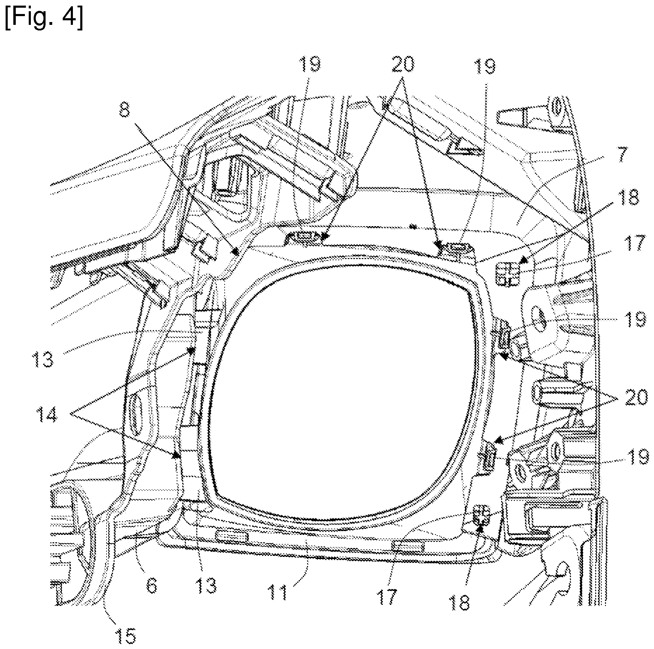

Puis, on couple par clippage l'enjoliveur 11 au moins à la troisième sous-partie 7, devant la face avant 10 du boîtier 9, tout en faisant passer au moins une bouterolle 13 de l'enjoliveur 11 au travers d'un premier trou 14 qui lui correspond et qui est défini dans la deuxième sous-partie 6 (comme illustré non limitativement sur la figure 4).

Dans la seconde étape 130-140, du procédé d'assemblage, on fait traverser chaque bouterolle 13 au travers d'un deuxième trou qui lui correspond et qui est défini dans la structure 15, puis on solidarise une extrémité libre de chaque bouterolle 13 à la structure 15. Le reste du panneau 1 est aussi solidarisé à une face interne (orientée vers le panneau 1) de la structure 15 de la porte 3.

Grâce au clippage de l'enjoliveur 11 sur la partie supérieure 4, puis à la solidarisation de chaque bouterolle 13 de l'enjoliveur 11 à la structure 15 de la porte 3, on n'a plus de problème d'accostage entre l'enjoliveur 11 et les première 5, deuxième 6 et troisième 7 sous-parties de la partie supérieure 4, tout comme on n'a plus de risque de vibration locale de l'enjoliveur 11 par rapport à la partie supérieure 4 ou de cette dernière (4) par rapport à la structure 15. Par conséquent, l'assemblage réalisé par la mise en oeuvre du procédé selon l'invention ne risque plus de nuire à l'impression visuelle et/ou sonore de qualité du véhicule.

Par exemple, dans la seconde étape 130-140 on peut solidariser l'extrémité libre de chaque bouterolle 13 à la structure 15 par une fonte par ultrasons alors que l'enjoliveur 11 est plaqué étroitement contre la partie supérieure 4, par exemple en exerçant une pression sur lui avec une main. On notera que la fonte pourrait également se faire par un chauffage localisé. On comprendra que la fonte de l'extrémité libre de chaque bouterolle 13 est destinée à la déformer afin qu'elle vienne se plaquer contre la face de la structure qui est opposée à sa face interne, et ainsi provoque une immobilisation locale, de qualité, de l'enjoliveur 11 et de la partie supérieure 4 par rapport à la structure 15 de la porte 3.

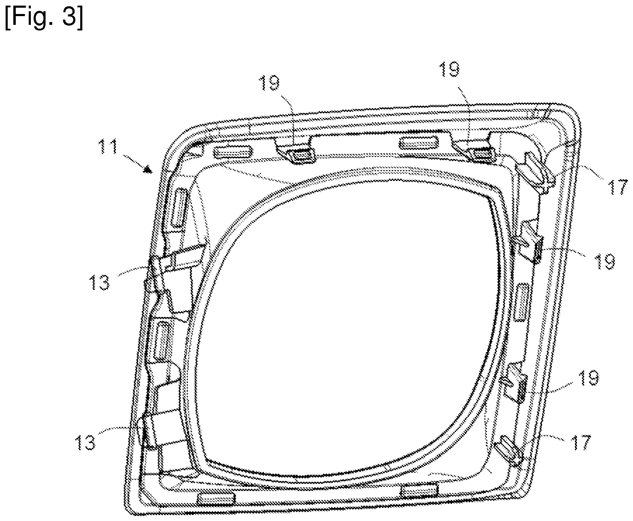

On notera également, comme illustré non limitativement sur les figures 3 et 4, que dans la première étape 100-120 on peut faire passer au moins un pion d'indexage 17 de l'enjoliveur 11 au travers d'un troisième trou 18 qui lui correspond et qui est défini dans la troisième sous-partie 7 afin de positionner l'enjoliveur 11 par rapport à cette dernière (7) avant de réaliser le clippage. On comprendra qu'une fois que ce pion d'indexage 17 traverse le troisième trou 18 correspondant, on est certain que le clippage se fera au(x) bon(s) endroit(s) et donc sans difficulté.

De préférence, et comme illustré non limitativement sur les figures 3 et 4, dans la première étape 100-120 on peut faire passer au travers de deux troisièmes trous 18 deux pions d'indexage 17 qui sont définis sur un premier côté de l'enjoliveur 11, comportant aussi au moins un clip 19 et situé à l'opposé d'un deuxième côté comportant chaque bouterolle 13. Cela permet de positionner encore plus précisément l'enjoliveur 11 par rapport à la troisième sous-partie 7 et donc par rapport à la partie supérieure 4 du panneau de porte 1, et par conséquent de faciliter encore plus le clippage.

Par exemple, et comme illustré non limitativement sur les figures 3 et 4, chaque pion d'indexage 17 peut présenter une section en forme de croix, et chaque troisième trou 18 peut présenter une forme rectangulaire (éventuellement carrée).

On notera également, comme illustré non limitativement sur les figures 3 et 4, que dans la première étape 100-120 on peut clipper l'enjoliveur 11 sur la troisième sous-partie 7 au moyen d'au moins deux clips 19 qui sont définis sur au moins des premier et troisième côtés voisins de l'enjoliveur 11. Comme évoqué précédemment, le premier côté de l'enjoliveur 11 est celui qui comprend aussi préférentiellement deux pions d'indexage 17 et qui est situé à l'opposé du deuxième côté comportant chaque bouterolle 13.

Ces clips 19 peuvent, par exemple et comme illustré non limitativement sur les figures 3 et 4, être des pattes flexibles munies chacune d'un cran, ayant une face en pente permettant son glissement contre un bord d'une paroi de la troisième sous-partie 7, et une face d'arrêt prolongeant cette face en pente et permettant d'empêcher la translation locale de l'enjoliveur 11 par rapport à la troisième sous-partie 7 une fois qu'elle est passée au-delà de la paroi précitée. Par exemple, et comme illustré non limitativement sur la figure 4, la paroi précitée de la troisième sous-partie 7 peut comporter des découpes 20 dans lesquelles peuvent se translater respectivement les pattes flexibles pendant la phase de clippage. On comprendra que dans ce cas, les pions d'indexage 17 permettent de positionner précisément les pattes flexibles en face des découpes 20 correspondantes.

De préférence, et comme illustré non limitativement sur les figures 3 et 4, dans la première étape 100-120 on peut clipper l'enjoliveur 11 sur la troisième sous-partie 7 au moyen de deux clips 19 qui sont définis sur le premier côté de l'enjoliveur 11 et de deux autres clips 19 qui sont définis sur le troisième côté de l'enjoliveur 11 (joignant les premier et deuxième côtés (ici dans une partie supérieure)).

Les clips 19 permettent d'assurer la fixation et la mise en contrainte de l'enjoliveur 11 (et donc de l'aérateur 2) par rapport à la troisième sous-partie 7. Les bouterolles 13 permettent d'assurer la fixation et la mise en contrainte non seulement de l'enjoliveur 11 (et donc de l'aérateur 2) mais aussi de la partie supérieure 4 par rapport à la structure 15. Les éventuels pions d'indexage 17 permettent un positionnement précis de l'enjoliveur 11 par rapport à la troisième sous-partie 7.

On notera que l'on peut réaliser la première étape 100-120 longtemps avant la seconde étape 130-140, par exemple dans une usine produisant les panneaux de porte 1. Mais on pourrait aussi envisager de réaliser la première étape 100-120 juste avant la seconde étape 130-140 sur une chaîne de montage de véhicules.

On a schématiquement illustré sur la figure 6 un exemple d'algorithme mettant en oeuvre les première 100-120 et seconde 130-140 étapes du procédé décrit ci-avant.

Dans une première sous-étape 100 de la première étape on couple entre elles des première 5, deuxième 6 et troisième 7 sous-parties d'une partie supérieure 4 de panneau de porte 1 afin qu'elles délimitent une ouverture 8 pour un aérateur 2.

Dans une deuxième sous-étape 110 de la première étape on solidarise le boîtier 9 de l'aérateur 2 à la face arrière 12 de la partie supérieure 4, au niveau de l'ouverture 8.

Dans une troisième sous-étape 120 de la première étape on couple par clippage l'enjoliveur 11 au moins à la troisième sous-partie 7, devant la face avant 10 du boîtier 9, tout en faisant passer au moins une bouterolle 13 de l'enjoliveur 11 au travers d'un premier trou 14 correspondant et défini dans la deuxième sous-partie 6.

Dans une quatrième sous-étape 130 de la seconde étape on fait traverser chaque bouterolle 13 au travers d'un deuxième trou correspondant et défini dans la structure 15 d'une porte 3, puis on solidarise l'extrémité libre de chaque bouterolle 13 à cette structure 15.

Dans une cinquième sous-étape 140 de la seconde étape on termine de solidariser le reste du panneau 1 à la face interne de la structure 15 de la porte 3.

## Revendications

1. Procédé d'assemblage d'un panneau (1) à une porte (3) d'un véhicule, ledit procédé comprenant une première étape (100-120) dans laquelle on constitue une partie supérieure (4) dudit panneau (1) munie d'un aérateur (2) comportant un boîtier (9) ayant une face avant (10) devant laquelle est placé un enjoliveur (11), et une seconde étape (130-140) dans laquelle on solidarise ledit panneau (1) à une face interne d'une structure (15) de ladite porte (3), **caractérisé en ce que** i) dans ladite première étape (100-120) on couple entre elles des première (5), deuxième (6) et troisième (7) sous-parties de ladite partie supérieure (4) afin qu'elles délimitent une ouverture (8), puis on solidarise ledit boîtier (9) à une face arrière (12) de ladite partie supérieure (4), au niveau de ladite ouverture (8), puis on couple par clippage ledit enjoliveur (11) au moins à ladite troisième sous-partie (7), devant ladite face avant (10) du boîtier (9), tout en faisant passer au moins une bouterolle (13) dudit enjoliveur (11) au travers d'un premier trou (14) correspondant et défini dans ladite deuxième sous-partie (6), et ii) dans ladite seconde étape (130-140) on fait traverser chaque bouterolle (13) au travers d'un deuxième trou correspondant et défini dans ladite structure (15), puis on solidarise une extrémité libre de chaque bouterolle (13) à ladite structure (15).

2. Procédé selon la revendication 1, **caractérisé en ce que** dans ladite seconde étape (130-140) on solidarise ladite extrémité libre de chaque bouterolle (13) à ladite structure (15) par une fonte par ultrasons alors que ledit enjoliveur (11) est plaqué étroitement contre ladite partie supérieure (4).

3. Procédé selon la revendication 1 ou 2, **caractérisé en ce que** dans ladite première étape (100-120) on fait passer au moins un pion d'indexage (17) dudit enjoliveur (11) au travers d'un troisième trou (18) correspondant et défini dans ladite troisième sous-partie (7) afin de positionner ledit enjoliveur (11) par rapport à cette dernière (7) avant de réaliser ledit clippage.

4. Procédé selon la revendication 3, **caractérisé en ce que** dans ladite première étape (100-120) on fait passer au travers de deux troisièmes trous (18) deux pions d'indexage (17) définis sur un premier côté dudit enjoliveur (11) comportant aussi au moins un clip (19) et situé à l'opposé d'un deuxième côté comportant chaque bouterolle (13).

5. Procédé selon l'une des revendications 1 à 4, **caractérisé en ce que** dans ladite première étape (100-120) on clippe ledit enjoliveur (11) sur ladite troisième sous-partie (7) au moyen d'au moins deux clips (19) définis sur au moins des premier et troisième côtés voisins dudit enjoliveur (11).

6. Procédé selon la revendication 5, **caractérisé en ce que** dans ladite première étape (100-120) on clippe ledit enjoliveur (11) sur ladite troisième sous-partie (7) au moyen de deux clips définis sur ledit premier côté de l'enjoliveur (11) et de deux clips définis sur ledit troisième côté de l'enjoliveur (11).

7. Porte (3) destinée à équiper un véhicule, **caractérisée en ce qu'**elle est réalisée par la mise en oeuvre du procédé d'assemblage selon l'une des revendications précédentes.

8. Porte selon la revendication 7, **caractérisée en ce qu'**elle est destinée à délimiter partiellement une partie avant d'un habitacle de véhicule.

9. Véhicule, **caractérisé en ce qu'**il comprend au moins une porte (3) selon la revendication 7 ou 8.

10. Véhicule selon la revendication 9, **caractérisé en ce qu'**il est de type automobile.

## Patentansprüche

1. Verfahren zum Verbinden einer Platte (1) mit einer Tür (3) eines Fahrzeugs, wobei das Verfahren einen ersten Schritt (100-120), in dem ein oberer Teil (4) der Platte (1) gebildet wird, der mit einem Lüfter (2) versehen ist, der ein Gehäuse (9) mit einer Vorderseite (10) aufweist, vor der eine Zierblende (11) angeordnet ist, und einen zweiten Schritt (130-140) umfasst, in dem die Platte (1) mit einer Innenfläche einer Struktur (15) der Tür (3) verbunden wird, **dadurch gekennzeichnet, dass** i) In dem ersten Schritt (100-120) werden erste (5), zweite (6) und dritte (7) Unterteile des Oberteils (4) miteinander gekoppelt, um eine Öffnung (8) zu begrenzen, dann wird das Gehäuse (9) an einer Rückseite (12) des Oberteils (4) an der Öffnung (8) befestigt, und dann wird die Zierkappe (11) zumindest mit dem dritten Unterteil (7) vor der Vorderseite (10) des Gehäuses (9) gekuppelt, wobei zumindest ein Pfropfen (11) hindurchgeführt wird 3) der Zierblende (11) durch ein entsprechendes erstes Loch (14), das in dem zweiten Teilabschnitt (6) definiert ist, und ii) in dem zweiten Schritt (130-140) jeder Widerhaken (13) durch ein entsprechendes zweites Loch, das in der Struktur (15) definiert ist, hindurchgeführt wird und dann ein freies Ende jedes Widerhakens (13) mit der Struktur (15) verbunden wird.

2. Verfahren nach Anspruch 1, **dadurch gekennzeichnet, dass** in dem zweiten Schritt (130-140) das freie Ende jedes Stopfens (13) mit der Struktur (15) durch Ultraschallgießen verbunden wird, während die Zierkappe (11) fest gegen den oberen Teil (4) gedrückt wird.

3. Verfahren nach Anspruch 1 oder 2, **dadurch gekennzeichnet, dass** in dem ersten Schritt (100-120) mindestens ein Indexstift (17) der Zierblende (11) durch ein entsprechendes drittes Loch (18) geführt wird, das in dem dritten Teilabschnitt (7) definiert ist, um die Zierblende (11) relativ zu dieser letzteren (7) zu positionieren, bevor das Einklemmen erfolgt.

4. Verfahren nach Anspruch 3, **dadurch gekennzeichnet, dass** in dem ersten Schritt (100-120) durch zwei dritte Löcher (18) zwei Indexstifte (17) geführt werden, die auf einer ersten Seite der Zierblende (11) definiert sind, die auch mindestens einen Clip (19) aufweist und gegenüber einer zweiten Seite angeordnet ist, die jeden Stopfen (13) aufweist.

5. Verfahren nach einem der Ansprüche 1 bis 4, **dadurch gekennzeichnet, dass** in dem ersten Schritt (100-120) die Zierblende (11) mittels mindestens zweier Clips (19), die auf mindestens der ersten und dritten benachbarten Seite der Zierblende (11) definiert sind, auf den dritten Teilabschnitt (7) geklickt wird.

6. Verfahren nach Anspruch 5, **dadurch gekennzeichnet, dass** in dem ersten Schritt (100-120) die Zierblende (11) mittels zweier auf der ersten Seite der Zierblende (11) definierter Klipse und zweier auf der dritten Seite der Zierblende (11) definierter Klipse auf den dritten Teilabschnitt (7) geklickt wird.

7. Tür (3) zum Einbau in ein Fahrzeug, **dadurch gekennzeichnet, dass** sie durch Anwendung des Montageverfahrens nach einem der vorhergehenden Ansprüche hergestellt ist.

8. Tür nach Anspruch 7, **dadurch gekennzeichnet, dass** sie dazu bestimmt ist, einen vorderen Teil eines Fahrzeuginnenraums teilweise zu begrenzen.

9. Fahrzeug, **dadurch gekennzeichnet, dass** es mindestens eine Tür (3) nach Anspruch 7 oder 8 umfasst.

10. Fahrzeug nach Anspruch 9, **dadurch gekennzeichnet, dass** es ein Kraftfahrzeug ist.

## Claims

1. A method of assembling a panel (1) to a door (3) of a vehicle, said method comprising a first step (100-120) in which an upper part (4) of said panel (1) is formed provided with an aerator (2) comprising a housing (9) having a front face (10) in front of which a cover (11) is placed, and a second step (130-140) in which said panel (1) is secured to an inner face of a structure (15) of said door (3), **characterized in that** i) in said door first step (100-120) first (5), second (6) and third (7) sub-parts of said upper part (4) are coupled to each other so as to define an opening (8), then said casing (9) is secured to a rear face (12) of said upper part (4), at the level of said opening (8), then said cover (11) is coupled by clipping to at least said third sub-part (7), in front of said front face (10) of the casing (9), while passing at least one stop (13) The cover (11) is passed through a corresponding first hole (14) defined in said second sub-part (6), and (ii) in said second step (130-140) each snap ring (13) is passed through a corresponding second hole defined in said structure (15), and a free end of each snap ring (13) is secured to said structure (15).

2. A method as claimed in claim 1, **characterized in that** in said second step (130-140) said free end of each bottle (13) is secured to said structure (15) by ultrasonic melting while said cover (11) is pressed tightly against said upper portion (4).

3. A method according to claim 1 or 2, **characterized in that** in said first step (100-120) at least one indexing pin (17) of said cover (11) is passed through a corresponding third hole (18) defined in said third subpart (7) in order to position said cover (11) with respect to the latter (7) before performing said clipping.

4. Method according to claim 3, **characterized in that** in said first step (100-120), two indexing pins (17) defined on a first side of said cover (11) also comprising at least one clip (19) and located opposite a second side comprising each snap ring (13) are passed through two third holes (18).

5. Method according to one of claims 1 to 4, **characterized in that** in said first step (100-120) said cover (11) is clipped onto said third sub-part (7) by means of at least two clips (19) defined on at least the first and third adjacent sides of said cover (11).

6. A method according to claim 5, **characterized in that** in said first step (100-120) said cover (11) is clipped onto said third subpart (7) by means of two clips defined on said first side of the cover (11) and two clips defined on said third side of the cover (11).

7. Door (3) for fitting to a vehicle, **characterized in that** it is produced by carrying out the assembly process according to one of the preceding claims.

8. Door according to claim 7, **characterized in that** it is intended to partially delimit a front part of a vehicle passenger compartment.

9. Vehicle, **characterized in that** it comprises at least one door (3) according to claim 7 or 8.

10. Vehicle according to claim 9, **characterized in that** it is of the automobile type.
